Europäisches Patentamt

**European Patent Office**

**Office européen des brevets**

(11) Numéro de publication: **0 219 494 B1**

# (12) FASCICULE DE BREVET EUROPEEN

(45) Date de publication de fascicule du brevet: **11.03.92**    (51) Int. Cl.5: **H01T 4/14**, H02H 9/06

(21) Numéro de dépôt: **85902059.6**

(22) Date de dépôt: **30.04.85**

(86) Numéro de dépôt internationale :
**PCT/FR85/00101**

(87) Numéro de publication internationale :
**WO 86/06558 (06.11.86 86/24)**

(54) **DISPOSITION DE PROTECTION DES INSTALLATIONS ELECTRIOUES FRAGILES CONTRE LES EFFETS DE LA FOUDRE ET DISPOSITIFS PRECONISES POUR UNE TELLE DISPOSITION.**

(43) Date de publication de la demande:
**29.04.87 Bulletin 87/18**

(45) Mention de la délivrance du brevet:
**11.03.92 Bulletin 92/11**

(84) Etats contractants désignés:
**AT BE CH DE FR GB IT LI LU**

(56) Documents cités:
EP-A- 0 092 052    DE-A- 2 143 543
DE-A- 2 920 979    FR-A- 2 554 284
US-A- 2 993 146    US-A- 3 631 323
US-A- 4 328 523

**See also references of WO8606558**

(73) Titulaire: **SCHAFF, Jean-Paul**
**18 avenue des Tilleuls**
**F-19200 Ussel(FR)**

(72) Inventeur: **SCHAFF, Jean-Paul**
**18 avenue des Tilleuls**
**F-19200 Ussel(FR)**

(74) Mandataire: **Chanet, Jacques**
**B.P. 27 95bis avenue de Royat**
**F-63400 Chamalières(FR)**

EP 0 219 494 B1

Rank Xerox (UK) Business Services

# Description

La présente invention est du domaine des techniques de l'électricité et elle a pour objet un dispositif visant à protéger des effets de la foudre une installation électrique, telle qu'installation de transformation, de transmission hertzienne ou autres installations électriques ou électroniques sensibles.

La présente invention fait application d'éléments connus de l'art antérieur, tel que parafoudre à résistance variable, parafoudre à éclateur, moyens de raccordement des conducteurs électriques, prises de terre.

On connaît par une publication DE-A-2.920.979 une disposition de protection d'une installation électrique basse tension contre les surtensions, disposition selon laquelle un éclateur et une résistance variable ou un parafoudre peuvent être montés en parallèle de part et d'autre d'une bobine à noyau de ferrite montée en série sur une ligne d'arrivée;

Selon la présente invention un dispositif de protection contre les effets de la foudre d'une installation de transformation de courant électrique ou autre installation électrique sensible alimentée par une ligne d'arrivée, est conforme à l'objet de la revendication 1. Un tel dispositif est connu du brevet FR-A 2554284, déposé par le même demandeur que la présente demande le 26.10.83 et publié le 03.05.1985.

De préférence, les éclateurs du premier jeu d'éclateurs au moins sont du type, dit à grand pouvoir d'écoulement, décrit dans une demande de brevet FR-A 2546674 ou E.P.A-0135572 correspondant à la demande internationale publiée WO84/03594 PCT/FR84/00049) du même Demandeur.

De préférence enfin, et cela conditionne l'excellente performance de la disposition de la protection sus-décrite, les conducteurs de mise à la terre des éclateurs sont isolés et sont disposés au voisinage du sol dans une gaine isolante comportant des attaches elles-mêmes isolantes avec des vis en matière amagnétique.

La disposition telle que ci-dessus décrite s'applique par exemple à un terminal de ligne alimentant une installation électrique sensible, mais elle pourrait tout aussi bien s'appliquer à un poste de transformation, constituant l'installation électrique sensible comportant une ligne de départ en basse ou moyenne tension, dans ce cas la relation électrique entre ledit poste de transformation et la ligne de départ (en général ligne aérienne) comporte pour chacune des phases au moins un second jeu d'éclateurs, au moins une seconde bobine de self inductance et au moins un second parafoudre à résistance variable. La disposition générale sus-décrite sera réalisée de façon optimale avec des éclateurs à cornes et des bobines de self inductance dont certaines caractéristiques relèvent aussi de la présente invention.

Une corne d'éclateur relevant de l'invention comporte, suivant une première caractéristique une lumière oblongue au voisinage du milieu de celle de ses branches destinées à être une branche horizontale. Suivant une seconde caractéristique, la lumière oblongue précitée est excentrée par rapport à l'axe longitudinal de ladite branche horizontale.

Suivant une première variante de réalisation la section de ladite corne sur ses parties autres que celles entourant ladite lumière, est une section carrée.

Suivant une deuxième variante de réalisation, la section de la corne sur ses parties autres que celles entourant ladite lumière, est une section rectangulaire ; suivant une première alternative, la grande dimension du rectangle de ladite section rectangulaire est parallèle au plan de la corne ; suivant une autre alternative, la grande dimension du rectangle de ladite section rectangulaire est perpendiculaire au plan de la corne.

Suivant une troisième variante de réalisation, la section de ladite corne sur ces parties autres que celles entourant ladite lumière, est une section circulaire.

Suivant une caractéristique secondaire, l'extrémité opposée à l'autre branche, dite inclinée, de la branche, dite horizontale, est filetée.

Suivant une autre caractéristique secondaire, le métal constitutif de ladite corne est un métal amagnétique, de préférence un alliage d'aluminium, tel que duralinox, ou encore acier inoxydable ou autre métal amagnétique au choix.

L'invention a aussi pour objet une bobine de self inductance, du type comportant un enroulement de fils électróconducteurs autour d'un manchon, caractérisée en ce que le manchon est un polyéthylène ou en un autre matériau équivalent ayant des caractéristiques diélectriques au moins égales, un couple d'isolateurs en un matériau tel que verre ou céramique, les isolateurs étant constitutifs de pieds supports du manchon, des éléments métalliques de jonction assurant à la fois la relation mécanique entre le manchon et les isolateurs et la relation électrique entre le bobinage enroulé autour du manchon et les parties de la ligne électroconductrice sur laquelle la self est montée en série, ces éléments de jonction étant des pièces en métal amagnétique pouvant incorporer une visserie de même nature.

De préférence, le bobinage comporte une seule couche de fils électroconducteurs ; toutefois, il ne s'agit pas d'une caractéristique essentielle et on pourra disposer le fil en plusieurs couches en cas de manque de place.

Le fil électroconducteur constitutif du bobinage ou enroulement est isolé par un vernis ou un gainage de même nature que le matériau constitutif du manchon assurant une isolation à au moins 1.000 Volts de tension minimale en service continu.

Le diamètre extérieur du manchon, donc celui de l'enroulement, est de préférence compris entre 250 et 300 mm, tandis que le nombre de spires sera compris entre 50 et 100 spires.

Les isolateurs utilisés sont rigoureusement identiques et homogènes dans leurs qualités diélectriques mécaniques et autres.

Une bobine de self-inductance, ou une pluralité de bobines, si le réseau est multiphasé, est caractérisée suivant la présente invention en ce que ladite bobine au moins baigne dans un milieu fortement diélectrique contenu dans une enceinte dite cuve électriquement isolée du sol ; de préférence ledit milieu est constitué par de l'huile de transformateur ; de préférence encore ladite cuve est constituée d'un métal bon conducteur ; de préférence encore ledit métal est un métal amagnétique.

Suivant une première forme de réalisation les bobines de ladite pluralité sont constituées de nappes concentriques. Suivant une seconde forme de réalisation les bobines sont constituées par des enroulements co-axiaux disposés côte à côte.

De préférence et d'une façon générale encore, lesdits enroulements sont supportés dans ladite cuve par des plots isolants. Chaque enroulement passe à travers la paroi de la cuve, à travers des bornes en porcelaine normalisées du type pour transformateur. De préférence, ladite cuve comporte une borne de mise à la terre de sa paroi. De préférence encore l'isolation de la cuve vis-à-vis du sol est assurée par des galets-roulettes en matière isolante à haut pouvoir d'isolation. De préférence enfin chaque enroulement est entouré d'une carcasse en matériau à coéfficient diélectrique élevé.

La triple bobine annule la ou les surtensions de manière équilibrée sur l'ensemble des phases et réciproquement entre elles, et grâce à sa cuve en métal amagnétique de forme proche du cube, fortement isolée du sol cette cuve fonctionnant en protection volumique équipotentielle de l'ensemble des bobines qu'elle contient ; il est à noter qu'une telle forme de la cuve a une très grande importance pour le bon fonctionnement du dispositif.

On sait en effet que la foudre, aussi bien que les effets qu'elle induit dans les conducteurs, notamment les conducteurs aériens, prend la forme d'une onde de très courte période et d'assez grande amplitude, notamment de tension ; on sait aussi qu'une onde éléctrique de très courte periode est arrêtée par les bobinages en raison de leur propriété de self inductance ; toutefois bien que connaissant cette propriété des bobines, on a jamais cherché de façon systématique à la connaissance du Demandeur, à l'utiliser comme moyen de protection des installations électriques vis-à-vis des effets directs ou indirects de la foudre.

Enfin, le dispositif de protection conforme à l'invention incorporera avantageusement, pour la jonction de câbles électróconducteurs un dispositif de raccordement, du type à coquille relevant aussi de l'invention. Suivant une caractéristique de ce dispositif de raccordement, chacune des coquilles est une pièce métallique massive allongée comportant un évidement axial et comportant en outre sur les faces de contact des coquilles entre elles, des reliefs longitudinaux destinés à s'encastrer les uns dans les autres.

De préférence une partie au moins de l'évidement axial est hémicylindrique.

De préférence, le rapport de la longueur des coquilles à leur plus petite dimension transversale lorsqu'elles sont accouplées est supérieur à six.

De préférence encore, une pluralité d'oreilles d'accouplement par vissage comporte un alésage axial perpendiculaire au plan de contact des coquilles.

De préférence encore, ladite pluralité d'oreilles est de trois pour chacun des deux côtés de chaque coquille.

De préférence encore, les alésages axiaux des oreilles d'au moins l'un des côtés d'une coquille sont taraudés sur une partie de leur longueur seulement, et les vis d'accouplement sont filetés sur une partie de leur longueur voisine de l'extrémité, la longueur de la partie filetée étant inférieure à la longueur de la partie non taraudée des oreilles.

De préférence encore, les coquilles présentent l'une par rapport à l'autre, lorsqu'elles sont accouplées une symétrie d'ordre 2, soit encore que chacune des coquilles est identique à l'autre.

De préférence encore, lesdites coquilles, leurs vis d'accouplement et leurs rondelles sont constitués d'un métal amagnétique.

De préférence encore, ledit métal amagnétique bon conducteur est soit le bronze, l'aluminium, le cuivre ou le laiton.

De préférence enfin, la profondeur cumulée des évidements de deux coquilles accouplées est légèrement inférieure aux épaisseurs cumulées des conducteurs destinés à être raccordés, et les largeurs des évidements axiaux sont respectivement égales aux largeurs des conducteurs raccordés. Dans le cas de deux conducteurs à section circulaire égale, l'évidement comporte une partie à paroi hémicylindrique et la profondeur cumulée des évidements de deux coquilles accouplées est légèrement inférieure à deux fois le diamètre des conducteurs destinés à être raccordés, et le rayon de la paroi de la partie hémicylindrique de l'évidement est égal au rayon des conducteurs.

La présente invention, sous ses différents aspects, sera mieux comprise et des détails en relevant apparaîtront à la description qui va être faite d'exemples ou de formes de réalisation, en relation avec les figures des planches annexées, dans lesquelles :

La fig.1 est un schéma explicatif de la disposition générale de l'invention.

La fig.2 est une application de l'invention à un poste de transformation moyenne tensionbasse tension.

La fig.3 est une application à un poste de tranformation basse tension - basse tension.

La fig.4 est une application en variante de la figure précédente dans laquelle la ligne d'arrivée comporte des protections en étages successsifs.

Les fig.5 à 7 illustrent trois cas d'installation mettant en oeuvre la disposition de la fig.1.

La fig.8 illustre un dispositif de protection à éclateurs de l'invention monté sur une ligne.

La fig.9 illustre sous deux angles, respectivement de profil et de dessus suivant AA un éclateur de la fig.8 ainsi que des coupes de diverses variantes d'exécution de celui-ci, cornes et boules.

La fig.10 illustre une variante de l'éclateur de l'invention avec cornes et boules.

La fig.11 illustre une autre variante de l'éclateur de l'invention, à boules seules.

Les fig.12 à 14 illustrent des formes d'exécution d'un accessoire de raccordement des figures précédentes.

La fig.15 illustre schématiquement une bobine de l'invention à un seul enroulement.

La fig.16 illustre de façon analogue une bobine à plusieurs enroulements.

La fig.17 est une illustration en perspective du dispositif de la présente invention vu de l'extérieur.

La fig.18 est une illustration schématique en coupe d'une première forme de réalisation du dispositif de la fig.17.

La fig.19 est une illustration schématique en coupe d'une seconde forme de réalisation du dispositif de la fig.17.

La fig.20 (a,b,c) illustre respectivement, en bout et de côté, deux coquilles, et des vis destinés à accoupler ces dernières.

La fig.21 est une vue en coupe à plus grande échelle d'un dispositif à coquilles assemblées pour le raccordement de deux câbles.

La fig.22 est une représentation analogue à celle de la figure précédente d'une variante du dispositif de l'invention.

La fig.23 illustre de côté et à plus petite échelle que la fig.21 un raccordement de conducteurs électriques, grâce au dispositif illustré sur cette dernière figure.

Les fig.24a,b,c,d,e illustrent des variantes dans lesquelles les conducteurs raccordés n'ont pas des sections circulaires égales.

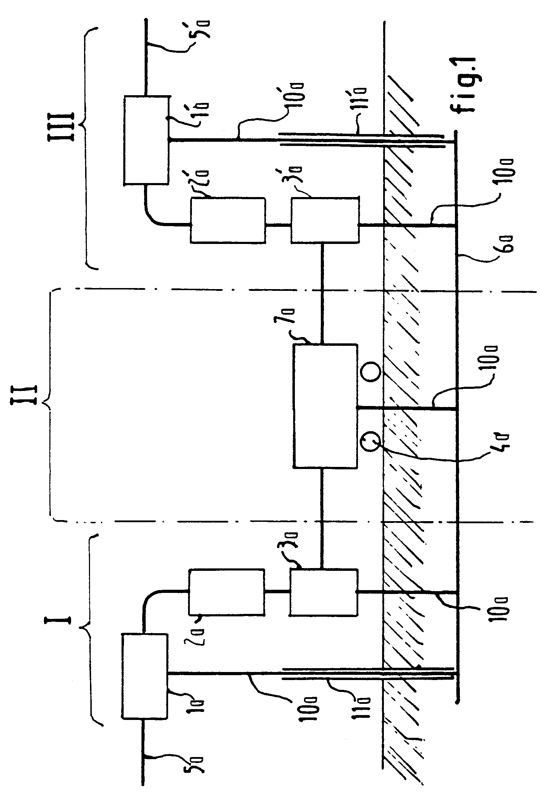

Sur la fig.1 une installation électrique comportant une partie aérienne peut être divisée schématiquement en deux ou trois parties I, II, III, à savoir une partie I constituant l'arrivée, une partie II constituant l'installation à protéger et une partie III éventuelle constituant une ligne aérienne de départ ; les parties I et II comportent successivement une ligne d'arrivée 5a, montée en dérivation sur cette ligne une mise à la terre 10a par l'intermédiaire d'un éclateur 1a qui est de préférence un éclateur à grand pouvoir d'écoulement, puis en prolongement de la ligne 5a une bobine de self inductance 2a, puis de nouveau une mise à la terre 10a montée en dérivation à la sortie de 1a self 2a par l'intermédiaire d'un parafoudre à résistance variable 3a, puis enfin alimenté par la ligne 5a un poste de transformation 7a lui-même compris dans une cage de Faraday reliée à la terre 6a.

Toujours suivant l'invention les conducteurs 10a de mise à la terre des éclateurs sont isolés à 1.000 V au moins et sont disposés au voisinage du sol dans une gaine isolante 11a comportant des attaches, au poteau par exemple, elles-mêmes isolantes avec des vis en matière amagnétique.

Toujours suivant l'invention l'installation 7a, transformateur ou autre, est montée sur des galets constitués d'une matière à forte capacité diélectrique (matière plastique composite, verre ou céramique).

La partie III de l'installation, lorsqu'elle existe, comprend, toujours selon l'invention, les mêmes éléments que ceux de la partie I ; ces éléments sont affectés des mêmes références mais primés ; il s'agit par exemple d'un second jeu d'éclateur 1'a, d'une seconde bobine de self inductance 2'a et d'un second parafoudre à résistance variable 3'a et cela pour chacune des phases.

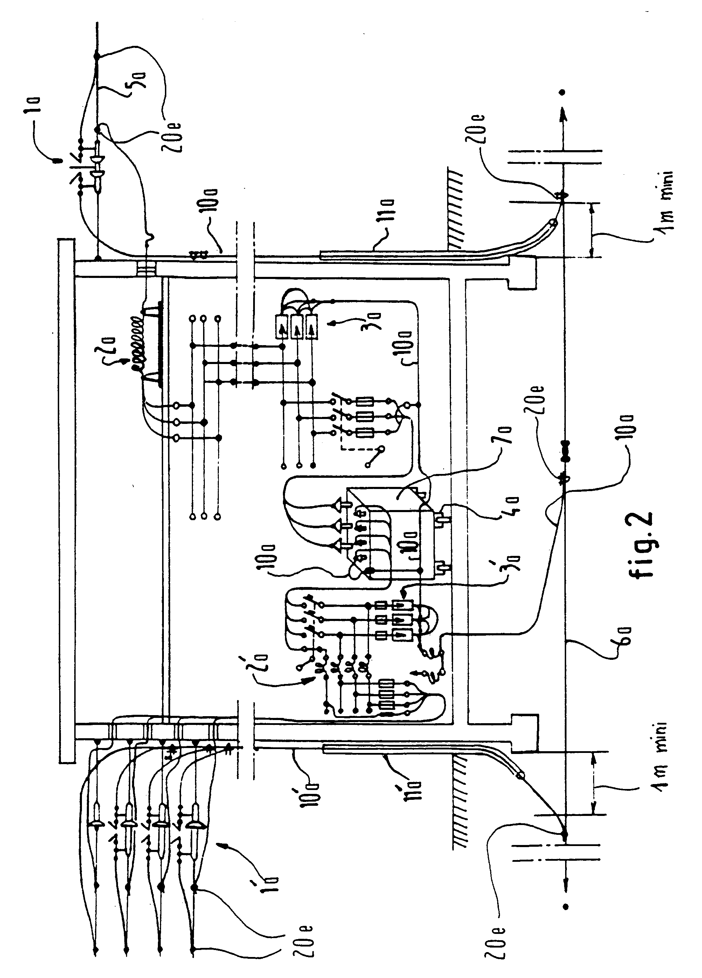

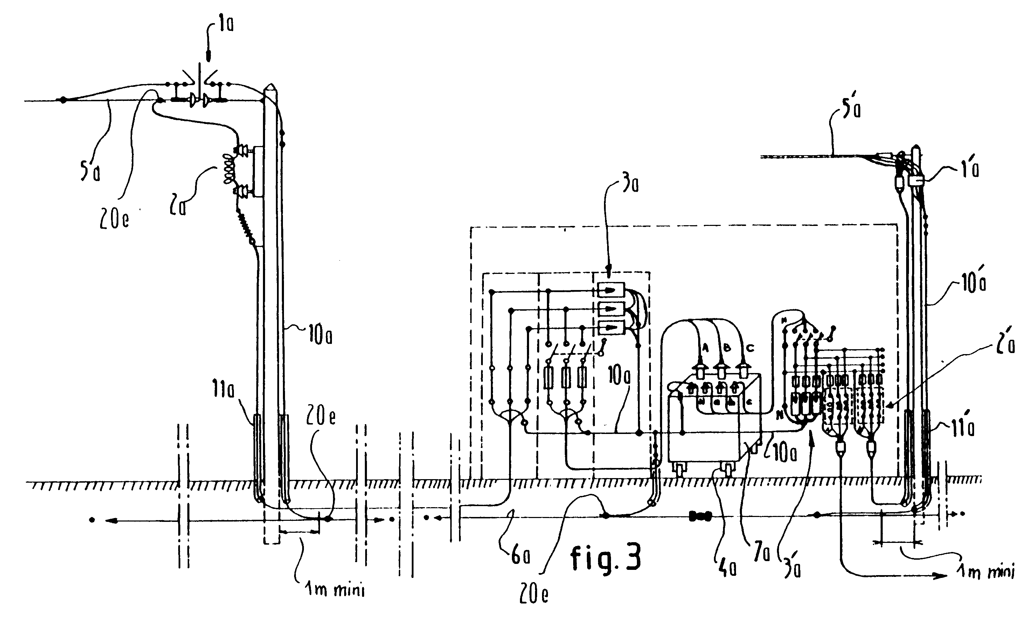

Sur les fig.2 et 3 qui montrent des installations de transformation, on retrouve les éléments caractéristiques de l'invention affectés des mêmes références qu'à la fig.1 ; on ne les décrira donc pas de façon plus explicite sachant que l'homme de l'art est à même d'interpréter ces figures qui pour des éléments connus répondent aux normes en la matière.

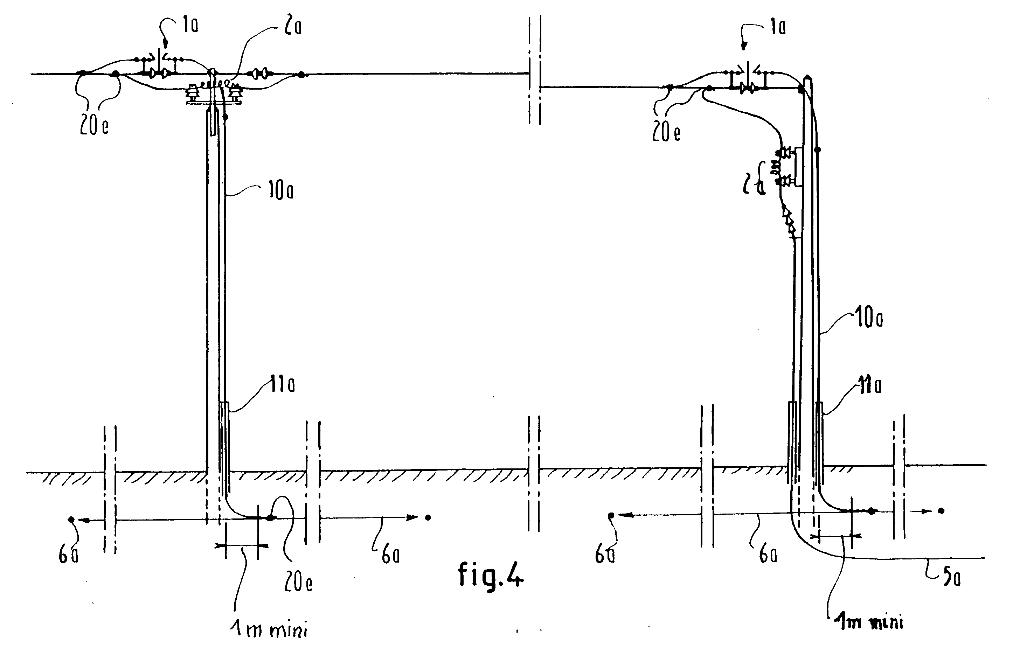

Sur la fig.4 on a illustré deux étages de protection supplémentaires comportant l'un et l'autre un jeu d'éclateur 1a et un jeu de self 2a étant entendu que ces étages se situent en amont de la partie I.

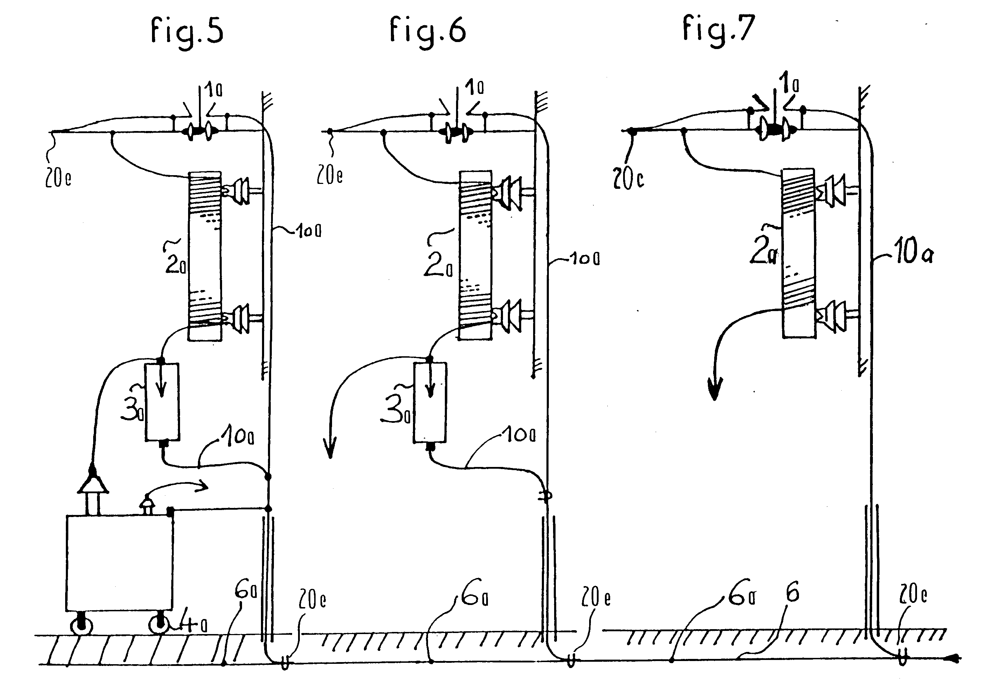

Sur les fig.5, 6 et 7 on a illustré trois cas d'installation incorporant respectivement, en premier lieu un éclateur, une bobine, un parafoudre à résistance variable et des galets d'isolation du transformateur de puissance, et en deuxième lieu un éclateur, une bobine et un parafoudre à résistance variable, et en troisième lieu un éclateur et une bobine, ces différents éléments étant affectés des mêmes références, respectivement 1a, 2a, 3a, 4a qui leur ont été données aux figures précédentes.

On notera que dans tous les cas il est recommandé d'utiliser une prise de terre 6a, dite prise de terre universelle équipotentielle, à grand pouvoir d'écoulement.

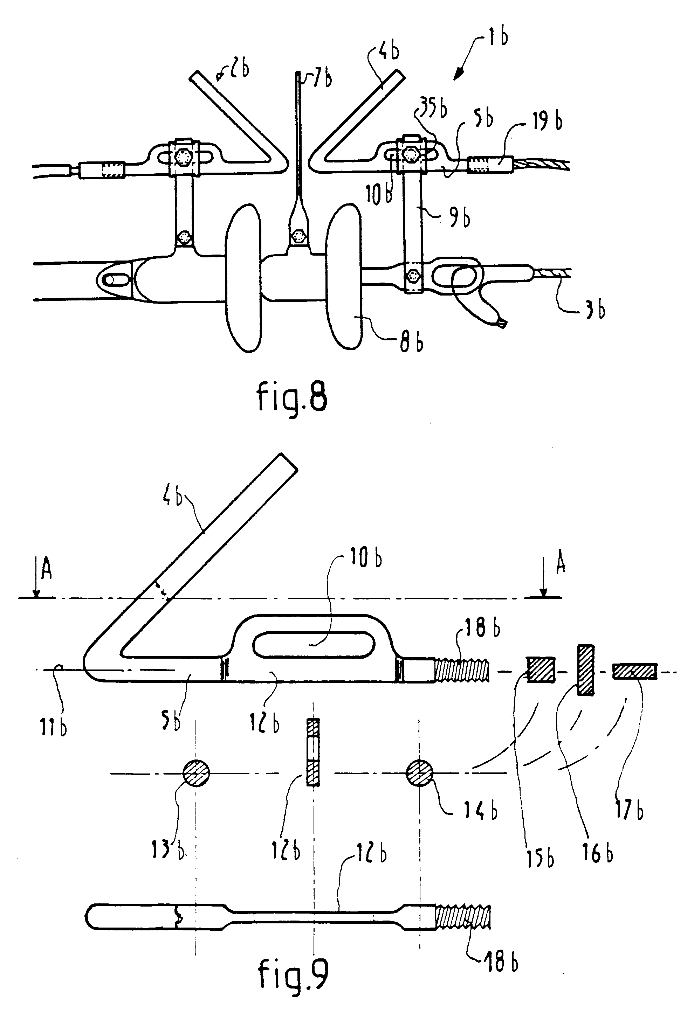

Sur la fig.8, un dispositif de protection par éclateur est essentiellement constitué de deux cornes 1b et 2b, la corne 1b étant reliée à la ligne 3b de transport de courant pour un conducteur nu 20b, la corne 2b étant reliée à la terre non représentée sur la figure. La corne 1b est constituée d'une branche inclinée 4b et d'une branche 5b ; il en est de même de l'autre corne. Les cornes sont à une distance telle qu'en cas de surtension due à la foudre, un arc peut s'établir entre elles et permettre ainsi l'évacuation de la surtension vers la terre à un dispositif anti-oiseau 7b disposé entre les cornes dans leur plan, et supporté par un isolateur tel que 8b. Les cornes sont supportées par un pied tel que 9b dont elles sont solidaires par visserie par l'intermédiaire de plaquettes tabulaires 35b à pattes rabattues sur la périphérie de la lumière 10b. Les pieds 9b ont des sections qui peuvent être carrées, circulaires, triangulaires, rectangulaires plus ou moins aplaties ; les pieds sont avantageusement, comme les cornes, en alliage amagnétique d'aluminium tel que duralinox ou en acier inoxydable ou autre métal amagnétique au choix.

Il apparait sur la fig.8 que le boulonnage des cornes sur leur pied est réalisé grâce à une lumière 10b oblongue de la branche horizontale de la corne, cela constituant une première caractéristique de celle-ci, lumière qui selon une seconde caractéristique est excentrée par rapport à l'axe de la branche horizontale.

Sur la fig.9, une corne d'éclateur analogue à celle de la fig.8 comporte elle aussi une lumière oblongue 10b décalée par rapport à l'axe 11b de la branche horizontale 5b. Cette lumière a été pratiquée dans une partie 12b aplatie de la branche horizontale ainsi que cela apparaît aussi bien sur la coupe que sur la vue de dessus. La section des autres parties de la branche est circulaire tel que cela apparaît sur les coupes 13b.

Ces parties autres que celles entourant la lumière peuvent avoir des sections non plus rondes tel qu'illustrées par les coupes 14b mais carrées telles qu'illlustrées par la coupe 15b ou encore rectangulaires avec leur grande dimension parallèle au plan de la corne telle que la coupe 16b ou perpendiculaire à celui-ci telle que la coupe 17b ; il en est bien entendu de même de la branche inclinée de la corne.

Il apparaît encore sur ces figures que l'extrémité de la corne opposée à la partie inclinée comporte un filetage 18b permettant son vissage dans un manchon 19b (fig.8).

Une corne de l'invention, telle que celle des figures précédentes est avantageusement réalisée en un alliage amagnétique d'aluminium tel que le duralinox, ou acier inoxydable ou autre métal amagnétique au choix. La visserie est également en alliage amagnétique d'aluminium tel que duralinox ou encore en acier inoxydable ou autre métal amagnétique au choix.

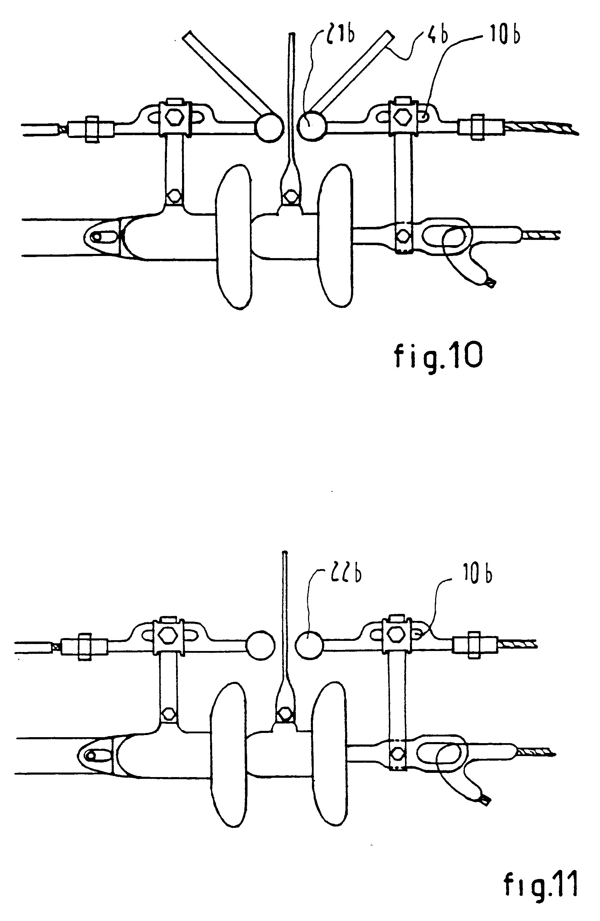

Sur la fig.10, un éclateur dérivé de celui des figures précédentes et comportant toujours une partie caractéristique à lumière 10b, en diffère par la présence d'un renflement sphérique 218 à la jonction de la partie inclinée 4b et de la partie horizontale des cornes ; les matériaux de réalisation sont les mêmes que ceux précédemment décrits.

Sur la fig.11, un éclateur conforme à l'invention comporte toujours une partie caractéristique à lumière 10b ; il dérive de l'éclateur de la figure précédente, mais en diffère par l'absence de la partie inclinée pour ne conserver qu'une boule 22b.

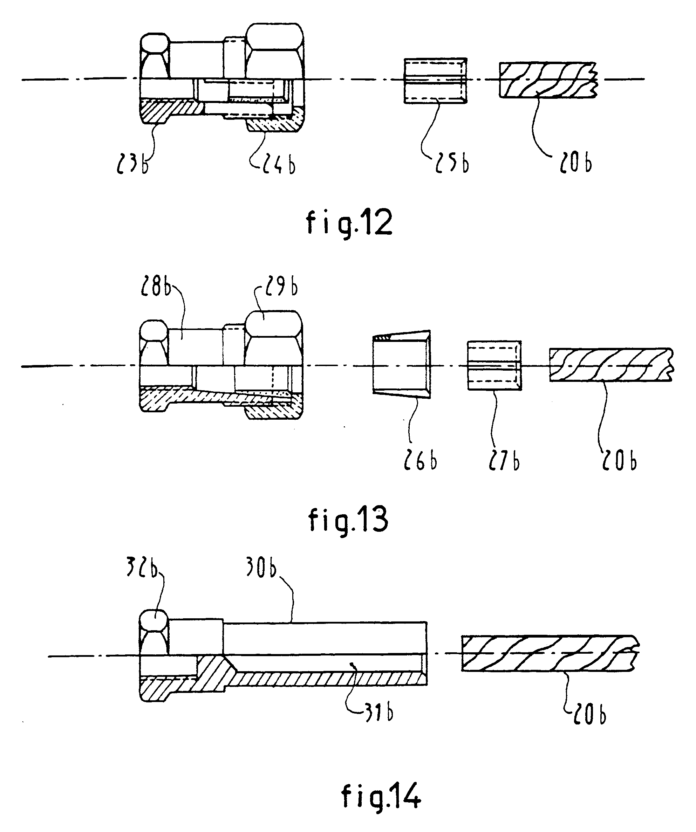

Sur les fig.12 à 14, on a représenté diverses formes d'exécution des manchons 19b de la fig.8. Sur la fig.12, le manchon est constitué par un mandrin à "pince" comprenant une vis creuse fendue 23b, un écrou creux 24b, l'un et l'autre à filetage conique, et une douille fendue 25b. Sur la fig.13, le dispositif de raccordement est constitué par un système à douille conique en bronze 26b et à douille 27b ; il comprend encore une vis creuse 28b et un écrou ou creux 29b. Sur la fig.14, le système de raccordement est constitué par un manchon allongé 30b comportant un long alésage borgne 31b dans lequel peut être engagé et serti le conducteur 20b, et au voisinage de son autre extrémité 32b, un filetage intérieur. Dans ces trois versions, les parties 23b, 28b et 32b sont filetées intérieument au même pas que celui des parties horizontales de l'éclateur. Ces pièces sont également en alliage amagnétique d'aluminium tel que duralinox ou encore en acier inoxydable ou tout autre métal amagnétique au choix.

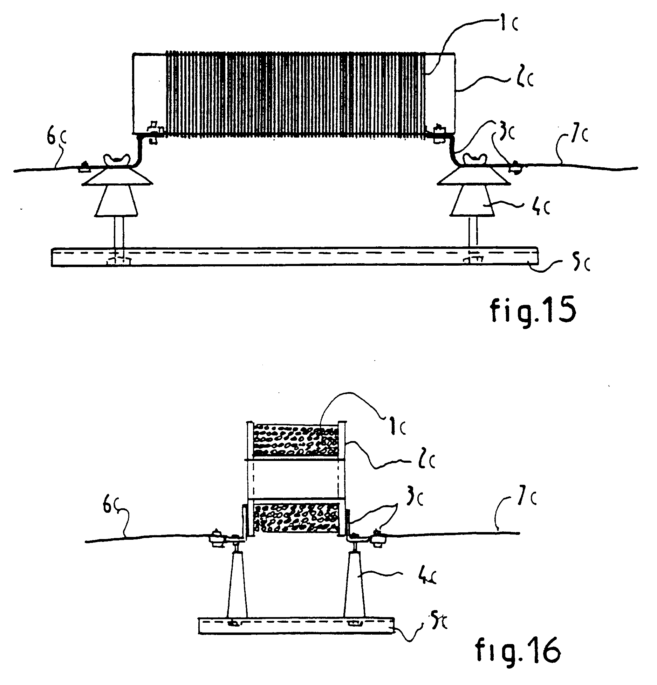

Sur la fig.15, une bobine de l'invention comprend essentiellement un enroulement 1c à une seule couche de fils de bobinage isolés à 1.000 Volts au minimum, un tube 2c, ou manchon, de bobinage, des organes de liaison 3c en métal amagnétique comportant une visserie de même nature et, à chaque extrémité du manchon, des isolateurs 4c en verre reliés solidairement d'une part aux éléments de jonction 3c et d'autre part à un socle 5c en U.

Sur la fig.16, on retrouve avec les mêmes références les organes analogues à ceux de la figure précédente à ceci près que le manchon 2c comporte des flasques d'extrémité pour contenir les enroulements superposés du fil, et que les isolateurs sont des isolateurs coniques en porcelaine.

Dans l'un et l'autre cas de figure, les isolateurs sont d'un type classique adaptés à la tension de service de la bobine. Il apparait clairement sur les figures que les éléments de jonction 3c mécaniquement solidaires des isolateurs et des manchons servent de bornes de jonction électrique du bobinage avec les arrivées et départs de lignes respectivement 6c et 7c.

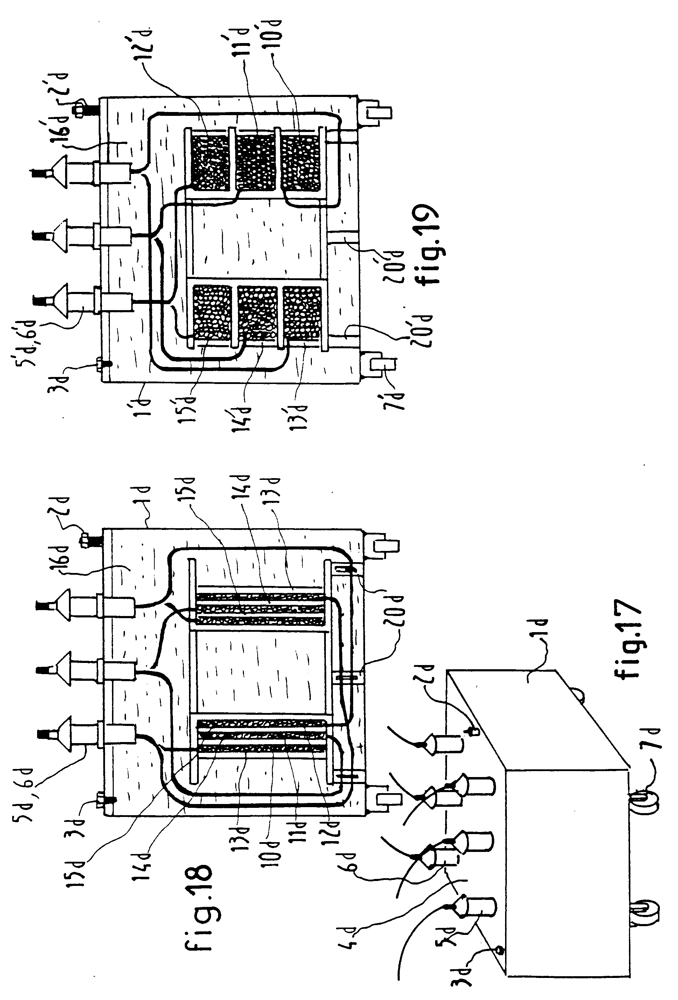

Sur la fig.17, le dispositif de l'invention comporte une cuve 1d constituée d'un métal non conducteur amagnétique ; la cuve comporte une borne de mise à la terre de sa paroi et un orifice de remplissage 3d ; la paroi supérieure 4d de la cuve comporte des bornes en porcelaine normalisées, telle que 5d pour l'entrée et 6d pour la sortie, ces bornes étant du type utilisé pour les transformateurs. L'isolation de la cuve 1d vis-à-vis du sol est assurée par des galets-roulettes tels que 7d à haut pouvoir d'isolation ; les parties de ces roulettes qui devraient être métalliques sont en un métal amagnétique.

Sur la fig.18 les bornes de chaque couple telles que les bornes 5d et 6d de la figure précédente, sont reliées à l'intérieur de la cuve 1d à un enroulement ou bobinage 10d, 11d ou 12d ; trois bobinages sont ainsi disposés à l'intérieur de la cuve et, conformement à cette première variante, les bobines sont superposées en nappes concentriques ; chaque enroulement 10d, 11d, 12d est entouré d'une carcasse en matériau à coefficient électrique élevé, ainsi la carcasse 13d superposée à l'enroulement 10d, ainsi la carcasse 14d comprise entre l'enroulement 10d et l'enroulement 11d, etc... Les bobines et leur carcasse baignent dans de l'huile de transformateur 16d constituant le milieu fortement diélectrique.

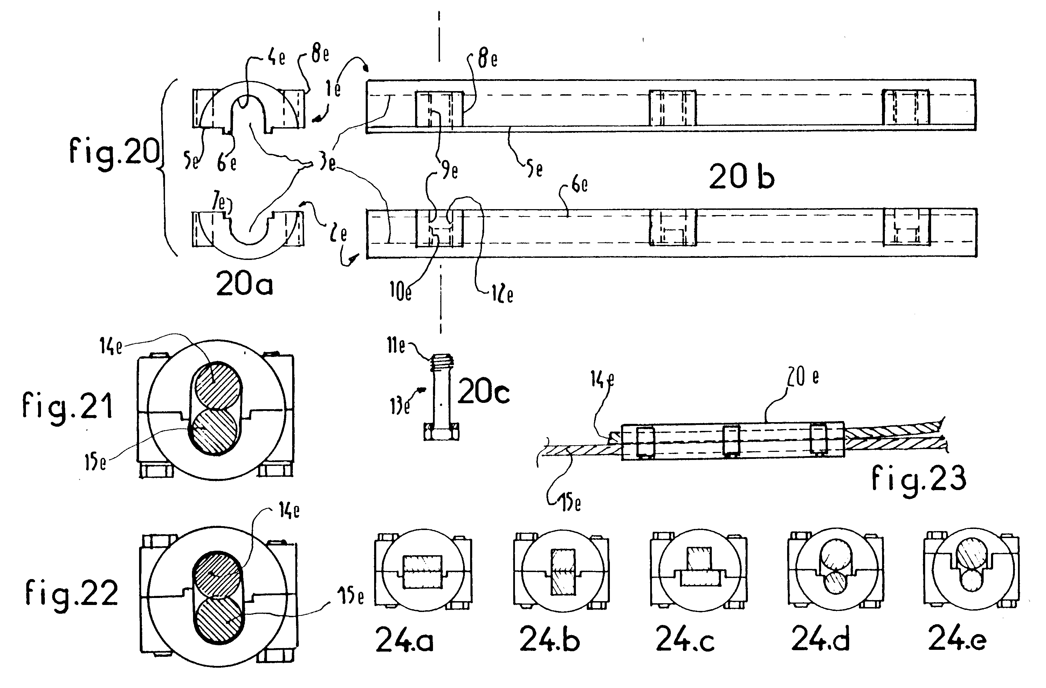

Sur la fig.19 des éléments analogues à ceux de la fig.18 sont représentés avec les mêmes références celles-ci étant primées.

On remarque enfin sur les deux figures de la planche que l'ensemble de la carcasse de l'une et l'autre variante est soutenu dans la cuve au moyen de plots isolants 20d ou 20'd.

On notera que d'une manière générale le dispositif de l'invention ne comporte aucun élément en métal magnétique, et que tous les éléments qui doivent être métalliques sont constitués par des métaux amagnétiques.

Sur les fig.20a, 20b et 20c un dispositif de l'invention est constitué de deux coquilles 1e et 2e comportant un évidement axial 3e dont une partie 4e de la paroi est hémicylindrique, les faces 5e de contact comportant des reliefs Longitudinaux (nervure 6e et rainure 7e) destinés à s'encastrer les uns dans les autres. Chaque coquille comporte sur chacun de ses côtés trois oreilles telles que 8e pourvues d'un alésage axial 9e pour le passage d'une vis 13e.

Il apparait sur la fig.20b notamment que l'alésage des oreilles de l'une des coquilles est taraudé sur seulement une partie 10e de leur longueur tandis que l'alésage de l'oreille antagoniste est taraudée sur toute sa longueur. Il apparaît sur la fig.20c que seule la partie d'extrémité 11e de la vis 13e est filetée et que la longueur de cette partie filetée est inférieure à la partie 12e non taraudée des alésages des oreilles de l'une des coquilles. Cette disposition évite de séparer les vis 13e de l'une des coquilles et d'échapper la vis ; ceci est particulièrement appréciable lorsque l'on sait que les travaux de raccordement s'effectuent à une certaine distance au-dessus du sol.

Sur les fig.21 et 22, il apparaît que la profondeur cumulée des évidements des deux coquilles accouplées est légèrement inférieure au diamètre des conducteurs circulaires 14e et 15e tandis que le rayon des parties hémicylindriques est sensiblement égal au rayon des conducteurs.

La fig.21 représente une forme de réalisation suivant laquelle l'une des coquilles comporte deux nervures tandis que l'autre coquille comporte deux rainures. Seules les coquilles comportant des rainures seront par exemple celles dont les alésages d'oreilles seront taraudés en partie.

La fig.22 représente une forme de réalisation dans laquelle les deux coquilles sont absolument identiques et sont disposées symétriquement par rapport à l'axe de leur évidement ; l'intérêt de cette forme de réalisation réside dans le fait que l'on n'a pas à apparier les coquilles préalablement à leur montage.

Sur la fig.23 on peut remarquer que la longueur du raccordement 20e est très importante par rapport au diamètre des câbles 14e et 15e ; on notera que la longueur du dispositif ne sera jamais inférieure à 130 millimètres, ce qui est apparu nécessaire pour un écoulement non dommageable des ondes de choc engendrées par la foudre.

De tels dispositifs de raccordement sont avantageusement utilisés dans les exemples d'installations électriques des fig.2 à 7, notamment pour la jonction des éclateurs à la ligne et la terre respectivement où ils sont repérés par la référence 20e.

Bien que l'on ait décrit et représenté des exemples particuliers de réalisation de la présente invention, il doit être compris que la portée de celle-ci n'est pas limitée à ces exemples mais qu'elle s'étend à toute installation ou dispositif comportant les caractéristiques générales définies plus haut.

**Revendications**

1. Dispositif de protection d'une installation de transformation de courant électrique ou installation analogue reliée à une ligne aérienne d'arrivée (5a) et éventuellement à une ligne aérienne de départ (5a), le dispositif de protection comprenant pour chaque ligne les éléments suivants :
un jeu d'éclateurs (1a,1'a), un jeu de bobines de self-inductance (2a,2'a) et un jeu de parafoudres (3a,3'a) à résistance variable, chaque bobine de self inductance (2a,2'a) étant disposée entre le côté de l'éclateur (1a,1'a) correspondant relié à la ligne (5a,5'a), et le côté du parafoudre (3a,3'a) à résistance variable correspondent reliée à l'installation caractérisé en ce que sur chaque phase de la liaison électrique entre chacune des lignes et l'installation:
- l'éclateur (1a) est relié à la terre par un conducteur isolé à 1.000 V au moins, ledit conducteur (10a) de mise à la terre des éclateurs étant disposé au voisinage du sol dans une gaine isolante (11a) comportant des attaches elles-mêmes isolantes avec des vis en matière amagnétique ;
- la bobine de self inductance (2) est constituée d'un enroulement d'une seule couche de fil d'environ cinquante spires d'un diamètre de 25 à 30 centimètres, lesdites spires étant isolées les unes des autres à au moins 1.000 V en tension continue, les spires de la bobine de self inductance (2) sont enroulées sur un tube en un matériau isolant ne comportant aucune pièce en métal magnétique ;
- le parafoudre à résistance variable (3) est relié à la terre par un conducteur isolé à 1.000 V au moins;

2. Eclateur utilisable dans une installation selon la revendication 1, étant destiné à la protection contre la foudre notamment des lignes électriques aériennes, et comprenant un couple d'électrodes métalliques, ou cornes, montées en regard et à proximité l'une de l'autre, l'une étant reliée à la ligne, l'autre étant reliée à la terre, chaque corne comportant deux branches coplanaires formant entre elles un angle aigu, caractérisé :
en ce qu'une corne (1b) comporte au voisinage du milieu de celle (5b) de ses branches destinée à être la branche horizontale une lumière (10b) oblongue ;

3. Eclateur selon la revendication 2, caractérisée :
en ce que ladite lumière oblongue est excentrée par rapport à l'axe longitudinal (11b) de ladite branche horizontale ;

4. Bobine de self-inductance utilisable dans une installation selon la revendication 1, ladite bobine étant destinée à la protection contre la foudre d'installations électriques, ladite bobine étant du type comprenant un enroulement de fils électro-conducteurs isolés autour d'un manchon supporté par des pieds, caractérisée :
en ce que ledit manchon (2c) est constitué d'un matériau ayant des propriétés diélectriques égales ou supérieures à celles du polyéthylène,
en ce que lesdits pieds incorporent un couple d'isolateurs (4c) constitués d'un matériau tel que verre ou céramique, et
en ce que les éléments (3c) de jonction solidaires du manchon et des isolateurs sont constitués d'un métal amagnétique ;

5. Bobine selon la revendication 4, caractérisée :
en ce que lesdits éléments (3c) de jonction du manchon aux isolateurs constituent des bornes électriques permettant de relier la bobine à la ligne ;

6. Bobine selon la revendication 4, caractérisée :
en ce que lesdits isolateurs (4c) dudit couple sont rigoureusement identiques l'un à l'autre ;

7. Bobine selon la revendication 4, caractérisée :
en ce que le fil constitutif de l'enroulement (1c), ou bobinage, est revêtu d'un isolant de même nature que le matériau constitutif du manchon ;

8. Bobine de self-inductance utilisable dans une installation selon la revendication 1, ladite bobine étant destinée à la protection d'installations électriques et électroniques sensibles caractérisée :
en ce que ladite bobine (10d,11d,12d) baigne dans un milieu (16d) fortement diélectrique contenu dans une enceinte dite cuve (1d) électriquement isolée du sol ;

9. Bobine selon la revendication 8, caractérisée :
en ce que ledit milieu est constitué par de l'huile de transformateur ;

10. Bobine selon la revendication 8, caractérisée :
en ce que ladite cuve 1d est constituée d'un métal bon conducteur amagnétique ;

11. Dispositif de raccordement de conducteurs électriques utilisable dans une installation selon la revendication 1, et notamment pour la connexion des éclateurs a la ligne et a la terre respectivement, du type comportant un couple de coquilles et des moyens de serrage pour rapprocher les coquilles l'une de l'autre et emprisonner les conducteurs disposés côte à côte, caractérisé :

en ce que chacune des coquilles (1e,2e) est une pièce métallique massive allongée comportant un évidement axial (3e) et comportant en outre sur les faces (5e) de contact des coquilles entre elles, des reliefs (6e,7e) longitudinaux destinés à s'encastrer les uns dans les autres ;

**12.** Dispositif selon la revendication 1, caractérisée :

en ce que, en outre, les transformateurs, ou autres composants de l'installation, sont montés sur des galets (4) à forte capacité diélectrique.

## Claims

**1.** Arrangement for the protection of an installation for transformation of electric current or similar installation connected to an overhead incoming line (5a) and eventually to an overhead outgoing line (5'a), the arrangement comprising for each line the following elements : a set of arresters (1a,1'a), a set of inductance coils (2a,2'a) and a set of variable resistance arresters (3a,3'a), each inductance coil (2a,2'a) being located between the side of the corresponding arrester (1a,1'a) connected to the line (5a,5'a) and the side of the corresponding variable resistance arrester (3a,3'a) connected to the installation, characterized :

in that on each live wire of the electrical connection between each of the lines and the installation :

- the arrester (1a) is connected to the ground by a conductor insulated for a minimum of 1,000 V, the said grounding conductor (10a) of the arresters being located near the ground in an insulated sheath (11a) comprising fastenings, themselves insulated with screws made of non magnetic material ;
- the inductance coil (2) is made of a winding of approximately fifety loops 25 to 30 centimeters in diameter, insulated from one another to at least 1,000 V in continuous tension, the loops of the inductance coil (2) are wound on a tube of insulating material containing no magnetic metal part ;
- the variable resistance arrester (3) is connected to the ground by a conductor insulated for a minimum of 1,000 V ;

**2.** Arrester usable in an installation as in claim 1, being intended for protection against lightning, particularly of overhead electric lines, and comprising a pair of metal electrodes, or horns, mounted facing and in proximity of one another, the one being connected to the line, the other being connected to the ground, each horn comprising two coplanar branches forming an acute angle between them, characterized :

in that one horn (1b) comprises an oblong opening (10b) near the middle of the one (5b) of its branches intended to be the horizontal branch ;

**3.** Arrester as in claim 2, characterized :

in that said oblong opening is off-center with respect to the longitudinal axis (11b) of said horizontal branch ;

**4.** Inductance coil usable in an installation as in claim 1, said coil being intended for the protection of the electrical installation against lightning, said coil being of the type comprising a winding of electroconducting wires insulated about a sleeve supported by feet, characterized :

in that said sleeve (2c) is made of a material having dielectric properties equal to or greater than those of polyethylene,

in that said feet incorporate a pair of insulators (4c) made of a material such as glass or ceramic, and

in that connecting elements (3c) solidary with the sleeve and insulators are made of a non magnetic metal ;

**5.** Coil as in claim 4, characterized :

in that said elements (3c) connecting the sleeve to the insulators form electrical terminals serving to connect the coil to the line ;

**6.** Coil as in claim 4, characterized :

in that said insulators (4c) of said pair are rigorously identical with one another ;

**7.** Coil as in claim 4, characterized :

in that the component wire of the winding (1c), or coil, is coated with an insulation of same nature as the component material of the sleeve ;

**8.** Inductance coil usable in an installation as in claim 1, said coil being intended for the protection of sensitive electrical and electronic installations, characterized :

in that said coil (10d,11d,12d) is bathed in an highly dielectric medium (16d) contained in an enclosure or pan (1d) electrically insulated from the ground ;

9. Coil as in claim 8, characterized :

in that said medium consists of transformer oil ;

10. Coil as in claim 8, characterized :

in that said pan 1d is made of a non magnetic metal which is a good conductor ;

11. Device for the connection of electrical conductors usable in an installation as in claim 1 and notably for the connection of arresters respectively to the line and to the ground, of the type comprising a couple of shells and fastening means to bring the shells together and grip the conductors set side by side, characterized :

in that each of the shells (1e,2e) is an elongated solid metal piece comprising an axial recess (3e) and comprising furthermore, on the contacting faces (5e) of the shells, longitudinal reliefs (6e,7e) intended to fit into one another ;

12. Device as in claim 1, characterized :

in that, furthermore, the transformers or other components of the installation are mounted on rollers (4) of high dielectric capacity.

**Patentansprüche**

1. Schutzvorrichtung für eine Umspannanlage für elektrischen Strom oder eine ähnliche Anlage, verbunden an eine Eingangs-Freileitung (5a) und gegebenenfalls an eine Ausgangs-Freileitung (5'a), wobei die Schutzvorrichtung für jede Leitung die folgenden Elemente aufweist: einen Satz von Funkenentladestrecken (1a, 1'a), einen Satz Selbstinduktionsspulen (2a, 2'a), und einen Satz Blitzableiter (3a, 3'a) mit variablem Widerstand, wobei jede Selbstinduktionsspule (2a, 2'a) auf der Eingangsseite der entsprechenden Funkenentladestrecke (1a, 1'a) an die Leitung (5a, 5'a) angeschlossen ist, und die Seite des Blitzableiters (3a, 3'a) mit variablem Widerstand entsprechend an die Anlage angeschlossen ist, dadurch gekennzeichnet, daß in jeder Phase der elektrischen Verbindung zwischen jeder der Leitungen und der Anlage der Blitzableiter (1a) mittels eines gegen wenigstens 1000 V isolierten Leiters geerdet ist, daß der Leiter (10a) zum Erden der Blitzableiter im Bereich des Bodens in einer isolierten Hülle (11a) angeordnet ist, umfassend Befestigungsvorrichtungen, die ihrerseits isolierend sind, mit Schrauben aus unmagnetischem Material; daß die Selbstinduktionsspule (2) aus einer Wicklung einer einzigen Drahtlage mit ungefähr 50 Windungen von einem Durchmesser von 25-30 cm besteht, daß die Windungen gegeneinander auf eine kontinuierliche Spannung von wenigstens 1000 V isoliert sind, daß die Windungen der Selbstinduktionsspule (2) auf eine Hülse aus isolierendem Material aufgewickelt sind, das kein magnetisches Metallteil enthält; und daß der Blitzableiter (3) variabler Spannung durch einen gegen wenigstens 1000 V isolierten Leiter geerdet ist.

2. Funkenentladestrecke, anwendbar bei einer Anlage gemäß Anspruch 1, bestimmt zum Blitzschutz insbesondere bei elektrischen Freileitungen und umfassend ein Paar metallischer Elektroden oder Polhörner einander gegenüberliegend und benachbart montiert sind, wobei das eine an die Leitung und das andere mit der Erde verbunden sind, wobei jedes Polhorn zwei co-planare Zweige umfaßt, die miteinander einen spitzen Winkel bilden, dadurch gekennzeichnet, daß ein Polhorn (1b) im Bereich der Mitte jenes (5b) seiner Zweige, der dazu bestimmt ist, der horizontale Zweig zu sein, eine langgestreckte Aussparung (10b) aufweist.

3. Funkenentladestrecke gemäß Anspruch 2, dadurch gekennzeichnet, daß die langgestreckte Aussparung in Bezug auf die Längsachse (11b) des horizontalen Zweiges exzentrisch ist.

4. Selbstinduktionsspule, anwendbar bei einer Anlage gemäß Anspruch 1, wobei die Spule zum Blitzschutz von elektrischen Anlagen bestimmt ist und von jener Bauart ist, die eine Wicklung isolierter, elektrisch leitender Drähte umfaßt, um eine Hülse, die von Füßen getragen ist, dadurch gekennzeichnet, daß die Hülse (2c) aus einem Material besteht, das dielektrische Eigenschaften aufweist, die gleich oder größer als jene von Polyethylen sind, daß die genannten Füße ein Paar Isolatoren (4c) einschließen, die aus einem Material wie Glas oder Keramik bestehen, und daß die mit der Hülse und den Isolatoren einteiligen Verbindungselemente (3c) aus einem unmagnetischen Metall bestehen.

5. Spule nach Anspruch 4, dadurch gekennzeichnet, daß die genannten Verbindungselemente (3c) der Hülse mit den Isolatoren aus elektrischen Klemmen bestehen, die eine Verbindung der Spule mit der Leitung erlauben.

6. Spule nach Anspruch 4, dadurch gekennzeichnet, daß die genannten Isolatoren (4c) des genannten Paares genau identisch miteinander sind.

7. Spule nach Anspruch 4, dadurch gekennzeichnet, daß der die Wicklung (1c) bildende Draht, oder die Spule, mit einem Isoliermittel von derselben Art wie das die Hülse bildende Material besteht.

8. Selbstinduktionsspule, anwendbar bei einer Anlage gemäß Anspruch 1, wobei die Spule zum Schutz empfindlicher elektrischer oder elektronischer Anlagen bestimmt ist, dadurch gekennzeichnet, daß die genannte Spule (10d, 11d, 12d) in eine stark dielektrische Umgebung (16d) eingebettet ist, eingehüllt in einer gegen die Erde elektrisch isolierten Wanne (1d).

9. Spule gemäß Anspruch 8, dadurch gekennzeichnet, daß die genannte Umgebung aus Transformatoröl besteht.

10. Spule gemäß Anspruch 8, dadurch gekennzeichnet, daß die genannte Wanne (1d) aus einem gut leitenden, unmagnetischen Metall besteht.

11. Vorrichtung zum Verbinden von elektrischen Leitern, anwendbar bei einer Anlage gemäß Anspruch 1, und insbesondere für die Verbindung von Funkenentladestrecken mit der Leitung bzw. der Erde, von jener Bauart, die ein Paar Schalen umfaßt, ferner Mittel zum Anpressen, um die Schalen aneinander anzunähern und die nebeneinander angeordneten Leiter einzuklemmen, dadurch gekennzeichnet, daß jede Schale (1e, 2e) ein massives, langgestrecktes metallisches Teil ist mit einer Axialausnehmung (3e), das unter anderem die gegenseitigen Kontaktflächen (5e) der Schalen umfaßt, sowie langgestreckte Reliefs (6e, 7e), die dazu dienen, sich ineinanderzufügen.

12. Vorrichtung gemäß Anspruch 1, dadurch gekennzeichnet, daß die Transformatoren oder andere Komponenten der Anlage unter anderem auf Rollen (4) hoher dielektrischer Kapazität gelagert sind.

fig.1

EP 0 219 494 B1

fig.2

fig.3

fig.4

# fig.5

20e

~2ₒ

3ₒ

10ₒ

+ₒ

6ₒ

20e

10ₒ

# fig.6

1ₒ

20e

~2ₒ

3ₒ

10ₒ

10ₒ

6ₒ

20e

# fig.7

1ₒ

20e

2ₒ

10ₒ

6ₒ    6

20e

EP 0 219 494 B1

fig.8

fig.9

fig.10

fig.11

EP 0 219 494 B1

fig.12

fig.13

fig.14

fig.15

fig.16

fig.19

fig.18

fig.17

fig.20

20a

20b

20c

fig.21

fig.22

fig.23

24.a    24.b    24.c    24.d    24.e

EP 0 219 494 B1